## Europäisches Patentamt
## European Patent Office
## Office européen des brevets

(19)

(11) Veröffentlichungsnummer : **0 392 380 B1**

(12) **EUROPÄISCHE PATENTSCHRIFT**

(45) Veröffentlichungstag der Patentschrift :
**28.10.92 Patentblatt 92/44**

(51) Int. Cl.⁵ : **B62D 61/12**

(21) Anmeldenummer : **90106610.0**

(22) Anmeldetag : **06.04.90**

(54) **Vorrichtung zum Anheben einer Schlepp- oder Nachlaufachse von Doppelachs-Aggregaten bei Nutzfahrzeugen.**

(30) Priorität : **08.04.89 DE 3911593**
**24.03.90 DE 4009576**

(43) Veröffentlichungstag der Anmeldung :
**17.10.90 Patentblatt 90/42**

(45) Bekanntmachung des Hinweises auf die
Patenterteilung :
**28.10.92 Patentblatt 92/44**

(84) Benannte Vertragsstaaten :
**DE ES FR GB IT SE**

(56) Entgegenhaltungen :
**WO-A-88/02314**
**DE-A- 2 635 668**
**FR-A- 1 167 680**
**US-A- 4 102 424**

(73) Patentinhaber : **Iveco Magirus
Aktiengesellschaft
Schillerstrasse 2 Postfach 27 40
W-7900 Ulm/Donau (DE)**

(72) Erfinder : **Wandura, Edwin
Kornhalde 17
W-7901 Staig (DE)**

(74) Vertreter : **Socha, Peter
Iveco Magirus AG Postfach 2740
Schillerstrasse 2
W-7900 Ulm (DE)**

## Beschreibung

Die Erfindung betrifft eine Vorrichtung zum Anheben einer Schlepp- oder Nachlaufachse von Doppelachs-Aggregaten bei Nutzfahrzeugen, mit einem am Fahrgestell angelenkten Kraftzylinder, dessen Kolbenstange an einem Schenkel eines Winkelhebels angelenkt ist, der in einen Hakeneingriff mit der anhebbaren Achse zum Zwecke des Anhebens und Absenkens der Achse bringbar ist.

Aus DE-OS 36 03 523 ist eine Hebevorrichtung einer Doppelachse für Last transportierende Fahrzeuge bekannt, wobei die Nachlaufachse an zwei Schwinghebeln montiert ist. Auf die Schwinghebel wirkt ein Kraftzylinder ein, um die anhebbare Achse auf- und abzubewegen. Die Anordnung ist so getroffen, daß ein großer Materialeinsatz gegeben ist, welcher gleichbedeutend mit einem Verlust an Nutzlast ist. Ein Einbau der Hebevorrichtung bei einer Pendelfederausführung eines Doppelachsaggregats ist nicht möglich. Erforderlich hierzu wäre die Umstellung der Feder und die Achsaufhängung.

Aus WO88/02314 ist eine weitere Hebevorrichtung für das Doppelachs-Aggregat eines Nutzfahrzeuges bekannt, deren Kraftzylinder über ein Zwischengelenk mit einer Wippe der Nachlaufachse verbunden ist, welche eine fahrgestellfeste Achse besitzt. Die Wippe nimmt an ihrem hinteren Ende die Drehachse der Nachlaufachse auf und ist an ihrem vorderen Ende mit der Feder der Vorlaufachse verbunden. Bei einem Ausfahren der Kolbenstange des Kraftzylinders schlägt das Zwischengelenk an einem Wippenanschlag an und schwenkt die Wippe dann dergestalt, daß die Nachlaufachse hochgehoben und die Vorlaufachse zusätzlich in Richtung Fahrbahn federvorgespannt wird. Das Zwischengelenk kann in seiner Anschlagstellung bezüglich der Wippe durch einen Verbindungsbolzen festgelegt werden. Wird nach einer Festlegung des Zwischengelenks der Kraftzylinder eingezogen, bewegt sich die Nachlaufachse nach unten und die Vorlaufachse nach oben. In einer nicht durch einen Verbindungsbolzen festgelegten Zwischenstellung des Zwischengelenks bzw. des Kraftzylinders berühren sowohl Vorlauf- als auch Nachlaufachse den Boden. Von Nachteil ist, daß der Kraftzylinder bei einem Einfederungsvorgang immer mitbewegt wird. Ferner muß das Zwischengelenk frei zugänglich sein, um den Verbindungsbolzen für ein Festlegen des Zwischengelenks an der Wippe manuell einbringen oder entfernen zu können. Ein Winkelhebel der eingangs genannten gattungsgemäßen Hebevorrichtung ist nicht vorgesehen.

Aus FR-PS 1 167 680 ist eine Hebevorrichtung für eine anhebbare Achse eines Doppelachsaggregats bekannt, welche einen rahmenfesten Winkelhebel verwendet, der durch einen pneumatisch betätigten Kraftzylinder geschwenkt werden kann. Am nicht mit dem Kraftzylinder verbundenen Schenkel des Winkelhebels ist ein Haken angelenkt, welcher für ein Hochheben der anhebbaren Achse mit letzterer in einen Eingriff gebracht werden kann.

Ähnlich zu vorgenannter Ausführungsform ist gemäß DE-GM 71 12 904 eine Vorrichtung zum Anheben einer Schlepp- oder Nachlaufachse der eingangs genannten Art bekannt, bei welcher ebenfalls ein Winkelhebel mit Haken rahmenfest angelenkt und der ebenfalls am Rahmen angelenkte Kraftzylinder mit seiner Kolbenstange an einem Schenkel des Winkelhebels verbunden ist. Der Kraftzylinder ist nach dieser Ausführungsvariante hydraulisch betrieben.

Beide letztgenannten bekannten Ausführungsformen einer Hebevorrichtung besitzen eine ungünstige Krafteinleitung, wodurch Winkelhebel und Kraftzylinder besonders stark bzw. kräftig dimensioniert sein müssen. Dies gilt auch für den am Winkelhebel angelenkten federvorgespannten Haken, der in einen Gegenhaken eingreift. Die Hakenhöhe liegt stets etwa ein Drittel des Reifendurchmessers über dem Boden, so daß die maximale Einfederung begrenzt ist. Insgesamt sind die Ausführungsformen vergleichsweise aufwendig getroffen und gehen mit einem großen Materialauf-wand und mit einem hohen Gewicht einher.

Aufbauend auf dem letztgenannten Stand der Technik ist es Aufgabe der Erfindung, eine Vorrichtung zum Anheben einer Schlepp- oder Nachlaufachse von Doppelachs-Aggregaten bei Nutzfahrzeugen zu schaffen, welche sehr einfach aufgebaut und insbesondere trotz hoher Betriebssicherheit leichtgewichtig ist und an Nutzfahrzeugen leicht nachgerüstet werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Mittel der Ansprüche 2 bis 14.

Wesen der Erfindung ist, den Winkelhebel nicht wie beim Stand der Technik rahmenfest anzulenken, sondern seinerseits mit einer am Fahrgestell angelenkten Koppel gelenkig zu verbinden, wobei der zweite, nicht mit der Kolbenstange des Kraftzylinders verbundene Schenkel des Winkelhebels selbst in einen Hakeneingriff mit der anhebbaren Achse bringbar ist. Zweckmäßigerweise weist der zweite Schenkel an vorderster nicht angelenkter Stelle einen Hebezapfen auf, welcher in einen nach unten geöffneten Haken der anhebbaren Achse eingreifen kann. Der Haken besitzt vorteilhafterweise eine untere Anlauffläche, an welche der Hebezapfen des Winkelhebels bei einer Schwenkbewegung des Winkelhebels nach Betätigung des Kraftzylinders anschlagen kann, bevor dieser zuverlässig in den nach unten geöffneten Haken formschlüssig eingreift und dann die Achse anhebt.

Die untere Anlauffläche ist zweckmäßigerweise ein im wesentlichen vertikaler Anschlag, welcher sich im Bereich der Drehachse der anhebbaren Achse befindet. Entsprechend zentral ist auch der Haken der anhebbaren Achse angeordnet, so daß sich eine gute Krafteinleitung bei einem Anhebevorgang ergibt.

Die Koppel ist vorzugsweise im Bereich der Wurzel des Winkelhebels angelenkt, und es ist für den ersten Schenkel des Winkelhebels ein fahrgestellfester Anlaufzapfen vorgesehen, der zweckmäßigerweise etwa auf gleicher Höhe des Anlenkpunkts der Koppel am Fahrgestell liegt. Der erste mit der Kolbenstange gelenkig verbundene Schenkel des Winkelhebels ist länger ausgebildet als die Koppel.

Anlaufzapfen und fahrgestellfester Koppelanlenkpunkt sind zweckmäßigerweise auf einer Lagerplatte ausgebildet, die ihrerseits am Fahrgestell befestigt ist.

Die Gesamtanordnung der Hebevorrichtung, insbesondere Längen und Anlenkpunkte des Kraftzylinders, der Kolbenstange, der Koppel sowie des Winkelhebels ist so getroffen, daß der Winkelhebel aufgrund seines Eigengewichts in einen Eingriff mit der Anlauffläche des Hakens der anhebbaren Achse gelangen kann. Koppel und zweiter Schenkel des Winkelhebels verlaufen bei angehobener Achse im wesentlichen vertikal. Mithin ist in der angehobenen Stellung der Achsdruck vornehmlich vom zweiten Schenkel sowie der Koppel aufgenommen, während der erste Schenkel des Winkelhebels, welcher mit dem Kraftzylinder verbunden ist, nur Stützfunktion hat.

Die erfindungsgemäße Anordnung weist wenige, stabile und insbesondere leichtgewichtige Bauteile auf. Mit Hilfe des fahrgestellfesten Anlaufzapfens ist der Winkelhebel unter Einwirkung seines Eigengewichts im Anfangsbereich einer Schwenkbewegung zur Durchführung eines Hakeneingriffs exakt geführt, bis der Anlaufzapfen des Winkelhebels an die Anlauffläche der anhebbaren Achse anschlägt. Anschließend übernimmt die Anlauffläche die Führungsfunktion bei einer Drehbewegung des Winkelhebels, bis dieser vollständig in den Haken der anhebbaren Achse eingreift und letztere durch die Kraft des Kraftzylinders anhebt. Dadurch ergibt sich eine günstige Kraftanlenkung und eine leichte Bauweise. Ein nachträglicher Einbau bei einer Pendelachse ist ohne große Umrüstkosten möglich.

Die Erfindung wird nachfolgend anhand eines Ausführungsbeispiels unter Bezugnahme auf die beigefügte schematische Zeichnung näher erläutert; es zeigen:

Fig. 1 eine Seitenansicht eines Doppelachs-Aggregats eines Nutzfahrzeugs mit einer Hebevorrichtung an einer Nachlaufachse in einer Ruhelage,

Fig. 2 die Anordnung nach Fig. 1 mit einer Hebevorrichtung im Augenblick des Erreichens eines Hakeneingriffs, und

Fig. 3 die Anordnung nach den Fig. 1 und 2 mit einer Hebevorrichtung in ihrer betätigten Lage, in der die Nachlaufachse angehoben ist.

Gemäß Zeichnung umfaßt ein Doppelachs-Aggregat eines Nutzfahrzeugs eine (vordere) Antriebsachse (9) und eine (hintere) Schlepp- oder Nachlaufachse (8), welche durch eine Hebevorrichtung (10) angehoben werden kann, um bei Leerfahrt bzw. Teillast nur mit der Antriebsachse zu fahren, nachdem die Nachlaufachse um einen ausreichenden Betrag von der Fahrbahn angehoben ist bei gleichzeitiger Absenkung der Antriebsachse aufgrund der blattgefederten Pendelausführung des Doppelachs-Aggregats. U. a. wird dadurch der Reifenverschleiß verringert und der Wendekreis verkleinert. Hebevorrichtungen gleicher Ausgestaltung sind hierbei für jedes Rad der anhebbaren Achse am Fahrgestell (1) befestigt, insbesondere am zugeordneten Längsträger des Fahrgestells.

Die Hebevorrichtung (10) umfaßt insbesondere einen am Längsträger des Fahrgestells (1) angelenkten doppelt wirkenden Kraftzylinder (3), dessen Kolbenstange (7) gelenkig mit einem ersten Schenkel (11) eines Winkelhebels (4) verbunden ist. Hierbei ist der Winkelhebel (4) am unteren Ende einer Koppel (5) im Bereich seiner Wurzel (13) angelenkt, während das obere Ende der Koppel (5) einen fahrgestellfesten Anlenkpunkt (14) aufweist, der im unteren Bereich einer vertikalen Lagerplatte (6) gelegen ist, die ihrerseits am zugehörigen Längsträger des Fahrgestells (1) fest verbunden ist.

Der Winkelhebel (4) besitzt einen stabilen zweiten Schenkel (12), der mit dem ersten Schenkel (11) einen Winkel von ca. 60° einschließt und an vorderster nicht angelenkter Stelle einen Hebezapfen (41) aufweist, welcher in einen nach unten geöffneten Haken (82) der anhebbaren Achse in Eingriff gebracht werden kann, um die Nachlaufachse anzuheben bzw. abzusenken.

Der nach unten geöffnete Haken (82) befindet sich im unmittelbaren Bereich der Drehachse der anhebbaren Achse (8) an hinterer Stelle und weist eine untere im wesentlichen vertikale Anlauffläche (81) auf, welche als Anschlag für den Hebezapfen (41) des Winkelhebels (4) dient, bevor der Hakeneingriff letztendlich vollzogen wird.

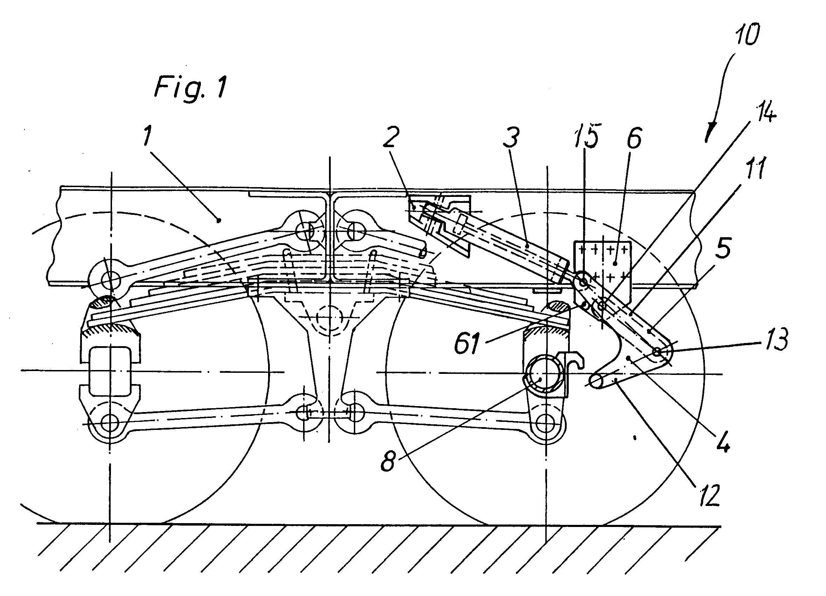

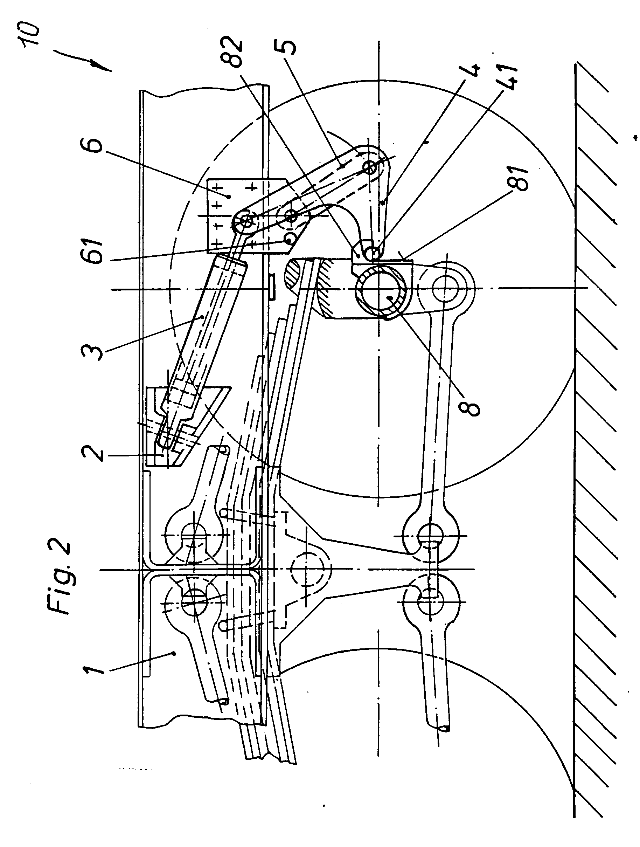

An der Lagerplatte (6) ist ferner ein Anlaufzapfen (61) vorgesehen, welcher etwa in der Höhe des Koppelanlenkpunkts (14) in unmittelbarer Nachbarschaft zu diesem gelegen ist. Der Anlaufzapfen (61) berührt seitlich an unterer Stelle den länger als die Koppel (5) ausgebildeten ersten Schenkel (11) des Winkelhebels (4), wenn sich die Hebevorrichtung (10) gemäß Fig. 1 in ihrer Ruhelage befindet, mithin die Kolbenstange (7) des doppelt wirkenden hydraulischen Kraftzylinders (3) eingefahren ist. Aufgrund des Eigengewichts des Winkelhebels (4) sowie der Koppel (5) liegt der erste Schenkel (11) ferner so lange am Anlaufzapfen (61) an, bis der Hebezapfen (41) an die Anlauffläche (81) der anhebbaren Achse (8) anschlägt. Anschließend übernimmt die Anlauffläche (81) die Führungsfunktion des Winkelhebels (4), während der erste Schenkel (11) aus einem Eingriff des Anlaufzapfens (61) gelangt, wie dies in Fig. 2 dargestellt ist. Gleichzeitig erfährt der Kraftzylinder (3) eine geringfügige Schwenkbewegung im Gegenuhrzeigersinn; entsprechend ist das fahrgestellfeste Zylinderlager (2) konzipiert.

Nachfolgend wird die Funktionsweise der Vorrichtung (10) zum Anheben der Schlepp- oder Nachlaufachse beschrieben.

In Fig. 1 ist die Hebevorrichtung (10) mit einem Kraftzylinder (3) gezeigt, dessen Kolbenstange (7) vollständig eingezogen ist. Der an der Kolbenstange (7) am Anlenkpunkt (15) angelenkte Winkelhebel (4) liegt hierbei im Bereich seines ersten Schenkels (11) am rahmenfesten Anlaufzapfen (61) an. Kraftzylinder (3), Winkelhebel (4) und Koppel (5), welche im wesentlichen in Richtung des ersten Schenkels (11) verläuft, bilden hierbei eine quasi starre Verbindung aufgrund des Eigengewichts der Anordnung. Die Nachlaufachse (8) kann frei pendeln.

Bei Betätigung des Kraftzylinders (3) gleitet der erste Schenkel (11) des Winkelhebels (4) aufgrund des Eigengewichts des Winkelhebels oder unterstützt durch Federkraft am Anlaufzapfen (61) entlang bei gleichzeitiger Schwenkbewegung des Winkelhebels (4), bis der Hebezapfen (41) des zweiten Schenkels (12) die Anlauffläche (81) erreicht. Bei einem weiteren Ausfahren der Kolbenstange (7) aus dem Kraftzylinder (3) gleitet der Hebezapfen (41) längs der Anlauffläche (81) hoch bei gleichzeitiger Entfernung des ersten Schenkels (11) vom Anlaufzapfen (61), bis der Hebezapfen (41) formschlüssig im nach unten geöffneten Haken (82) der anhebbaren Achse (8) aufgenommen ist (Fig.2).

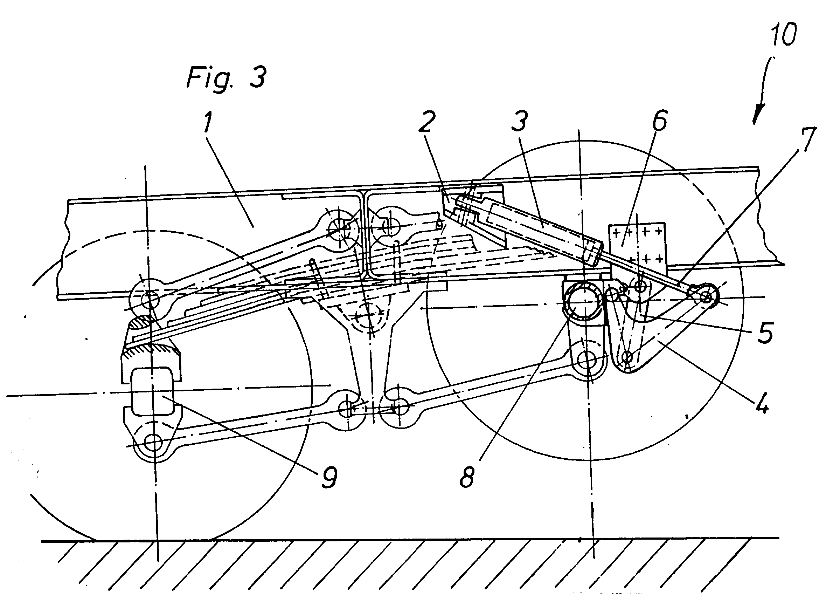

Durch den Schub des Kraftzylinders (3) wird die anhebbare Achse (8) gemäß Fig. 3 angehoben und die Antriebsachse (9) nach unten gedrückt, so daß Freigängigkeit der angehobenen Achse (8) zur Fahrbahn gegeben ist. In der angehobenen Stellung wird der Achsdruck hauptsächlich vom Winkelhebel (4), der Koppel (5) sowie der Lagerplatte (6) aufgenommen, während der Kraftzylinder (3) nur eine Stützfunktion ausübt.

Das Absenken der Achse (8) erfolgt durch Abbau des Drucks im Kraftzylinder (3) mit anschließender Beaufschlagung in Zugrichtung, wobei der Winkelhebel (4) wieder an der Anlauffläche (81) und am Anlaufzapfen (61) entlanggleitet und die Ruhelage gemäß Fig. 1 einnimmt.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

**Patentansprüche**

1. Vorrichtung (10) zum Anheben einer Schlepp- oder Nachlaufachse von Doppelachs-Aggregaten bei Nutzfahrzeugen, mit einem am Fahrgestell (1) angelenkten Kraftzylinder (3), dessen Kolbenstange (7) an einem Schenkel eines Winkelhebels (4) angelenkt ist, der in einen Hakeneingriff mit der anhebbaren Achse (8) zum Zwecke des Anhebens und Absenkens der Achse (8) bringbar ist,
dadurch gekennzeichnet,
daß der Winkelhebel (4) seinerseits mit einer am Fahrgestell (1) angelenkten Koppel (5) gelenkig verbunden und der zweite Schenkel (12) des Winkelhebels (4) selbst in einen Hakeneingriff mit der anhebbaren Achse (8) bringbar ist.

2. Vorrichtung nach Anspruch 1,
dadurch gekennzeichnet,
daß der zweite Schenkel (12) an vorderster nicht angelenkter Stelle einen Hebezapfen (41) aufweist, welcher in einen nach unten geöffneten Haken (82) der anhebbaren Achse (8) in Eingriff bringbar ist.

3. Vorrichtung nach Anspruch 2,
dadurch gekennzeichnet,
daß der Haken (82) mit einer unteren Anlauffläche (81) für einen in einen Hakeneingriff zu bringenden Hebezapfen (41) versehen ist.

4. Vorrichtung nach Anspruch 3,
dadurch gekennzeichnet,
daß die untere Anlauffläche (81) ein im wesentlichen vertikaler Anschlag im Bereich der Drehachse der anhebbaren Achse (8) ist.

5. Vorrichtung nach einem der Ansprüche 1 bis 4,
dadurch gekennzeichnet,
daß die Koppel (5) im Bereich der Wurzel (13) des Winkelhebels (4) mit diesem gelenkig verbunden ist.

6. Vorrichtung nach einem der Ansprüche 1 bis 5,
dadurch gekennzeichnet,
daß für den ersten Schenkel (11) des Winkelhebels (4) ein fahrgestellfester Anlaufzapfen (61) vorgesehen ist.

7. Vorrichtung nach Anspruch 6,
dadurch gekennzeichnet,
daß der Anlaufzapfen (61) im Bereich des Anlenkpunkts (14) der Koppel (5) am Fahrgestell (1) etwa auf gleicher Höhe gelegen ist, wobei der länger als die Koppel (5) ausgebildete erste Schenkel (11) des Winkelhebels (4) einen Kolbenstangen-Anlenkpunkt (15) aufweist, der bei nicht angehobener Achse höher liegt als der fahrgestellfeste Koppelanlenkpunkt (14) und der Anlaufzapfen (61).

8. Vorrichtung nach Anspruch 7,
dadurch gekennzeichnet,
daß der Anlaufzapfen und der fahrgestellfeste Koppelanlenkpunkt (14) auf einer Lagerplatte (6) ausgebildet sind, die ihrerseits am Fahrgestell (1) befestigt ist.

9. Vorrichtung nach einem der Ansprüche 1 bis 8,
dadurch gekennzeichnet,
daß bei angehobener Achse Koppel (5) und/oder zweiter Schenkel (12) des Winkelhebels (4) im wesentlichen vertikal angeordnet sind.

10. Vorrichtung nach einem der Ansprüche 1 bis 9,
dadurch gekennzeichnet,
daß die beiden Schenkel (11, 12) des Winkelhebels (4) einen Winkel von ca. 60° einschließen.

11. Vorrichtung nach einem der Ansprüche 1 bis 10,
dadurch gekennzeichnet,
daß die Längen und Anlenkpunkte des Kraftzylinders (3), der Kolbenstange (7), der Koppel (5) sowie des Winkelhebels (4) so ausgebildet bzw. angeordnet sind, daß der Winkelhebel (4) aufgrund seines Eigengewichts in einen Eingriff mit der Anlauffläche (81) des Hakens (82) der anhebbaren Achse (8) bringbar ist.

12. Vorrichtung nach einem der Ansprüche 1 bis 11,
dadurch gekennzeichnet,
daß ein doppelt wirkender Kraftzylinder (3) vorgesehen ist.

13. Vorrichtung nach einem der Ansprüche 1 bis 12,
dadurch gekennzeichnet,
daß jedes Rad der anhebbaren Achse (8) eine eigene Anhebeanordnung aufweist, wobei die Anhebeanordnungen im wesentlichen gleich ausgebildet sind.

14. Vorrichtung nach einem der Ansprüche 1 bis 13,
dadurch gekennzeichnet,
daß die anhebbare Achse (8) zusammen mit der Antriebsachse (9) eines blattgefederten Doppelachs-Aggregats pendelnd gelagert ist.

**Claims**

1. A device (10) for lifting a trailing or following axle of twin axle bogies in commercial vehicles, with a power cylinder (3) articulated to the chassis (1), the piston rod (7) of which power cylinder is articulated to a leg of an angle lever (4) which is adapted to be brought into hook engagement with the liftable axle (8) for the purpose of lifting and lowering the axle (8),
characterised in that
the angle lever (4) is, in turn, articulatedly connected with a connecting rod (5) which is articulated on the chassis (1), and the second leg (12) of the angle lever (4) itself is adapted to be brought into hook engagement with the liftable axle (8).

2. A device according to Claim 1,
characterised in that
the second leg (12) has at its most anterior point which is not articulated a lifting pin (41) which is adapted to be brought into engagement with a downwardly-open hook (82) of the liftable axle (8).

3. A device according to Claim 2,
characterised in that
the hook (82) is provided with a lower butting face (81) for a lifting pin (41) which is to be brought into hook engagement.

4. A device according to Claim 3,
characterised in that
the lower butting face (81) is a substantially vertical stop in the region of the axis of rotation of the axle (8) which is able to be lifted.

5. A device according to one of Claims 1 to 4,
characterised in that
the connecting rod (5) in the region of the root (13) of the angle lever (4) is articulatedly connected therewith.

6. A device according to one of Claims 1 to 5,
characterised in that
a butting pin (61), which is fixed to the chassis, is provided for the first leg (11) of the angle lever (4).

7. A device according to Claim 6,
characterised in that
the butting pin (61) is situated in the region of the articulation point (14) of the connecting rod (5) on the chassis (1) approximately at the same height at which the first shank (11) of the angle lever (4), which is constructed so as to be longer than the connecting rod (5), has a piston rod articulation point (15) which, when the axle is not lifted, lies higher than the connecting rod articulation point (14) fixed to the chassis and the butting pin (61).

8. A device according to Claim 7,
characterised in that
the butting pin and the connecting rod articulation point (14) fixed to the chassis are constructed on a bearing plate (6) which, in turn, is secured to the chassis (1).

9. A device according to one of Claims 1 to 8, characterised in that
with the raised axle, the connecting rod (5) and/or second leg (12) of the angle lever (4) are arranged substantially vertically.

10. A device according to one of Claims 1 to 9, characterised in that
the two legs (11,12) of the angle lever (4) form an angle of approximately 60°.

11. A device according to one of Claims 1 to 10, characteried in that
the lengths and articulation points of the power cylinder (3), of the piston rod (7), of the connecting rod (5) and also of the angle lever (4) are constructed or respectively arranged such that the angle lever (4), due to its own weight, is adapted to be brought into engagement with the butting face (81) of the hook (82) of the liftable axle (8).

12. A device according to one of Claims 1 to 11, characterised in that
a double-acting power cylinder (3) is provided.

13. A device according to one of Claims 1 to 12, characterised in that
each wheel of the liftable axle (8) has its own lifting arrangement, in which the lifting arrangements are of substantially identical construction.

14. A device according to one of Claims 1 to 13, characterised in that
the liftable axle (8) is arranged so as to oscillate together with the driving axle (9) of a twin-axle bogie which is sprung with a flat spring.

**Revendications**

1°) Dispositif (10) de soulèvement d'un essieu suiveur d'un train de roulement à deux essieux de véhicules utilitaires avec un vérin (3) articulé sur un châssis (1), dont la tige de piston (7) est articulée sur une patte d'une équerre (4), qu'on peut mettre en prise avec un crochet de l'essieu à relever (8) pour relever et abaisser l'essieu (8), caractérisé en ce que l'équerre (4) de son côté est articulée avec une bielle (5) articulée sur le châssis (1) et la deuxième patte (12) de l'équerre (4) peut être mise en prise avec un crochet de l'essieu (8) relevable.

2°) Dispositif selon la revendication 1, caractérisé en ce que la deuxième patte (12) présente à la partie antérieure non articulée un tourillon de levage (41), qu'on peut mettre en prise dans un crochet (82) ouvert vers le bas de l'essieu relevable (8).

3°) Dispositif selon la revendication 2, caractérisé en ce que le crochet (82) est muni d'une surface de contact inférieure (81) pour recevoir un tourillon de levage (41) qui vient en prise dans le crochet.

4°) Dispositif selon la revendication 3, caractérisé en ce que la surface de contact inférieure (81) est une butée essentiellement verticale dans le domaine de l'axe de rotation de l'essieu relevable (8).

5°) Dispositif selon l'une des revendications 1 à 4, caractérisé en ce que la bielle (5) est reliée par articulation à l'équerre (4) dans son domaine de fond (13).

6°) Dispositif selon l'une des revendications 1 à 5, caractérisé en ce qu'on prévoit pour la première patte (11) de l'équerre (4) un tourillon d'appui (61) solidaire du châssis.

7°) Dispositif selon la revendication 6, caractérisé en ce que le tourillon d'appui (61) au voisinage du point d'articulation (14) de la bielle (5) sur le châssis (1) est placé à peu près à la même hauteur, la première patte (11) de l'équerre (4) qui est plus longue que la bielle (5) présente un point d'articulation de tige de piston (15) qui, lorsque l'essieu n'est pas relevé, se trouve plus haut que le point d'articulation de la bielle (14) fixé sur le châssis et que le tourillon d'appui (61).

8°) Dispositif selon la revendication 7, caractérisé en ce que le tourillon d'appui et le point d'articulation de la bielle (14) fixé sur le châssis sont réalisés sur une plaque support (6), qui, de son côté est fixée sur le châssis (1).

9°) Dispositif selon l'une des revendications 1 à 8, caractérisé en ce que lorsque l'essieu est relevé, la bielle et/ou la deuxième patte (12) de l'équerre sont essentiellement disposées verticalement.

10°) Dispositif selon l'une des revendications 1 à 9, caractérisé en ce que les deux pattes (11, 12) de l'équerre (4) font un angle d'environ 60°.

11°) Dispositif selon l'une des revendications 1 à 10, caractérisé en ce que les longueurs et points d'articulation du vérin (3) de la tige de piston (7), de la bielle (5) ainsi que de l'équerre (4) sont constitués ou placés, de sorte que l'équerre (4) sous l'effet de son propre poids peut venir en prise avec la surface de contact (81) du crochet (82) de l'essieu (8) relevable.

12°) Dispositif selon l'une des revendications 1 à 11, caractérisé en ce qu'on prévoit un vérin (3) à double effet.

13°) Dispositif selon l'une des revendications 1 à 12, caractérisé en ce que chaque roue de l'essieu relevable (8) présente son propre dispositif de relevage, les dispositifs de relevage étant constitués de façon essentiellement identique.

14°) Dispositif selon l'une des revendications 1 à 13, caractérisé en ce que l'essieu relevable (8) est logé de façon pendulaire avec l'essieu moteur (9), sur un train d'essieu double à ressorts à lames.

*Fig. 1*

EP 0 392 380 B1

Fig. 2

Fig. 3